# EUROPEAN PATENT APPLICATION

(11) **EP 4 707 092 A1**
(43) Date of publication of application: **11.03.2026**
(21) Application number: 24199361.7
(22) Date of filing: 10.09.2024
(51) Int. Cl.: B60T 13/74

(54) **IMPROVED REDUNDANT POWER SUPPLY FOR ELECTRO-MECHANIC BRAKE SYSTEMS IN A VEHICLE, PREFERABLY IN A COMMERCIAL VEHICLE**

(71) Applicant: KB Intellectual Property GmbH & Co. KG, 82049 Pullach (DE)
(72) Inventor: MESZAROS, Nora, 9721 Gencsapáti (HU); NEMETH, Huba, 1116 Budapest (HU); LINDNER, Peter, 2300 Ráckeve (HU); TOTH, Zoltan, 1046 Budapest (HU); MOHAMED, Marwa, 80807 München (DE)

(57) **Abstract**

A redundant power supply system (rPMS) for an electro-mechanical brake system for a vehicle is disclosed comprising at least two brake circuits (1) and (2) wherein each brake circuit comprises at least two energy storage device modules (10, 15) connected in series in a configuration, so that the two modules together can supply electric power to wheelend brake actuators (17, 18).

## Description

With the increasing trend of electrification, Electro-Mechanic Brake Systems (EMBS) come into focus to achieve more precise braking control and faster responses by only using electrical signals and energy medium. Although today in the field of commercial vehicles the pneumatic or hydraulic systems are the most popular solutions, EMBS has several advantages from reduced volume and weight to reduced environmental emission.

These advantages can only be present if the brake system adheres to regulatory standards and certain safety requirements. The power required for the operation of the brake actuators and the control is stored and transmitted from an electric power supply system. Since the malfunction of this supply would result in compromising the braking ability of the vehicle, various levels or numbers of redundancies are required to improve the reliability and availability of the system.

In conventional pneumatic or hydraulic braking systems, the medium of air or hydraulic fluid is used to produce and transmit braking signals and braking force. The electro-mechanical brake on the other hand, represents a technology where both are generated and transmitted by electricity alone. In case of malfunction in the electrical transmission, the driver is not able to rely on any pneumatic or hydraulic backup system.

There is a potential risk of losing braking functionality and a risk of failing to deliver the expected braking performance and stability functions in case of failure in the power supply system without any backup options. The EMBS wheel end actuators and the control units require stable and sufficient power to function properly. Therefore, a redundant power supply system (rPMS) is needed to be able to fulfil the braking performance requested by the driver or based on an automated driving system's command.

E.g. from EP 3626505 A1 a system and method for providing redundant electric power is known. It discloses a redundant electric power supply system to at least one vehicle component. It contains at least one power management unit connected to the vehicle power network and one or more storage units where electric energy is stored. A vehicle component is connected to at least two storage units to provide a redundant supply.

Further prior art is known e.g. from WO 2023001770 A1 or EP 4077079 A1.

It is an object of the invention to provide an improved redundant power supply for electro-mechanic brake systems.

This object is achieved by a system according to the independent claims. Further advantageous developments are subject matters of the dependent claims.

The present invention discloses a solution where the electro-mechanical brake system has at least two separate circuits each supplied by a dedicated power supply unit. Each power supply unit is partitioned to two energy storage device submodules connected in series. A DC/DC converter is responsible for charging the energy storages from the vehicle board network and another DC/DC is used to balance the charge levels between the submodules. Since the role of this latter DC/DC converter is for balancing, it does not have to be Automotive Safety Integrity Level (ASIL) rated. *U*₁ voltage level is provided for the operation of the brake actuators and *U*₂ voltage level is provided in each circuit for the ECUs and sensors. In case of malfunction of the upper submodule, a U₂ voltage level can still be provided to ensure the mentioned control electronic function from the lower supply submodule.

In particular, the present invention discloses a solution wherein a redundant power supply system comprises at least two brake circuits wherein each brake circuit comprises at least two energy storage device modules connected in series in a configuration, so that the two modules together can supply electric power to brake actuators.

Preferably, the redundant power supply system (rPMS) comprises safety switches, preferably smart safety switches, for said at least two energy storage device modules being configured such that said energy storage device modules can be decoupled by said safety switches.

The advantage of the smart fuses and switches is the protection. In case of a failure in one of the components (like short circuit etc..) other components or other parts of the circuits can be decoupled and protected. This way partial operation of a circuit can still be ensured and the costs are reduced since not all components have to be replaced if a failure happens.

Additionally, they can measure current and voltage, they are controlled by the ECU, they are faster this way in reaction than the melting fuses, they are better suited for safety relevant applications. The difference between them is not significant. Between two active components (like DC/DC or energy storage) a switch is used and between a load and an energy source a fuse is used.

Preferably, said redundant power supply system (rPMS) comprises smart fuses for wheelend brake actuators being configured such that said wheelend brake actuators can be decoupled through said smart fuses.

Advantageously, said redundant power supply system (rPMS) comprises at least a DC/DC converter to provide power required by the energy storage modules for charging.

In general, a system for commercial vehicles is equipped with a redundant power supply system (rPMS) for an electro-mechanical brake system, wherein the redundant power supply system in each brake circuit contains at least two energy storage device modules connected in series, so that the lower part of the modules supplies safety critical loads/consumers.

Preferably, said system comprises smart fuses configured such that the safety critical loads can be decoupled by smart fuses. The advantages are the same as mentioned above.

Said safety critical load preferably can be a brake control ECU, a redundant Foot Brake Sensor, a redundant Trailer Control Module, a Hand Control Module, or any sensors.

This allows a wide range of loads, etc. to be supplied.

Said system preferably comprises a DC/DC converter that performs balancing between upper and lower energy storage modules connected in series.

Since the energy storage module is providing U2 for the loads, the DC/DC converter is used to balance the charge levels between the energy storage modules.

Said system preferably comprises smart safety switches configured such that the DC/DC converter can be decoupled by said smart safety switches. The advantages are the same as mentioned above.

Said system is preferably configured such that in case of failure of the upper energy storage module, the lower one can still ensure the power output for the safety critical loads.

The system can tolerate the fault of the upper module and still provide U2 (U1 is, of course, lost but U2 could be enough to perform some tasks).

Said redundant power supply system preferably comprises a normally closed switch to ensure power for the Foot Brake Sensor in an (ignition) OFF state.

This measure enhances the safety of the brake system even if the vehicle is in an OFF state at a standstill position.

In the following, the invention is explained in more detail by a preferred embodiment taking into account the appended figures.
Fig. 1 shows a schematic view of a redundant commercial vehicle electro-mechanic brake system.
Fig. 2 shows a schematic view of a circuit of the brake system with the power management in focus.
Fig. 3 shows two circuits 1 and 2 of the brake system with the focus of the rPMS modules and their contents.
Fig. 4 shows one circuit with a normally closed switch for supplying the rFBS in case of a vehicle in an OFF state.

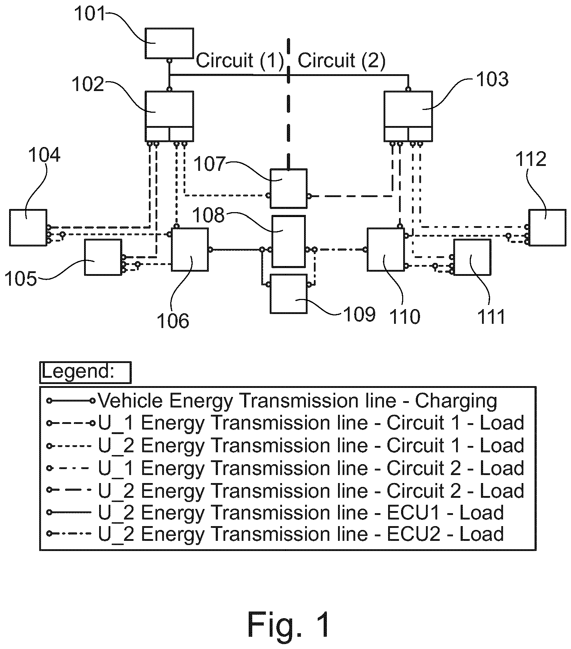

In **Fig.** 1 a brake system architecture of a commercial vehicle with redundant power supply is shown. The electro-mechanic brake system is composed of the following main components:
There are at least two main brake circuits (1) and (2) that are independent from each other. The brake system is redundantly supplied by redundant Power Management Systems (rPMS) 102 and 103. Both rPMS energy storages are connected to and charged from a vehicle board network 101. The redundant power management system rPMS 102 dedicatedly supplies in the example the front axle, and the redundant power management system rPMS 103 supplies the rear axle of the vehicle.

A Hand Control Unit (HCU) 107, a redundant Foot Brake Sensor (rFBS) 108 and a redundant Trailer Control Modul (rTCM) 109, if available, are supplied redundantly from each power supply circuits.

Front axle wheelend actuators 104 and 105 receive the required voltage level *U*₁ for the brake actuation from rPMS 102. A first brake circuit's Electronic Control Unit (ECU) 106 and sensors within wheelend actuators 104 and 105 receive the required voltage level *U*₂ for their operation from rPMS 102.

In a similar way, rear axle wheelend actuators 111 and 112 receive the required voltage level *U*₁ for the brake actuation from rPMS 103. A second circuit's ECU 110 and sensors within said wheelend actuators 111 and 112 receive the required voltage level *U*₂ for their operation from rPMS 103.

Recuperation from the brake actuators is possible and handled by the corresponding rPMS modules.

Within each power supply circuits there are smart safety switches (SSSW) to decouple circuits from the board network and from each other. Furthermore, there are multiple smart fuses (SF) that protect the different loads / consumers in case of a malfunction of other consumers.

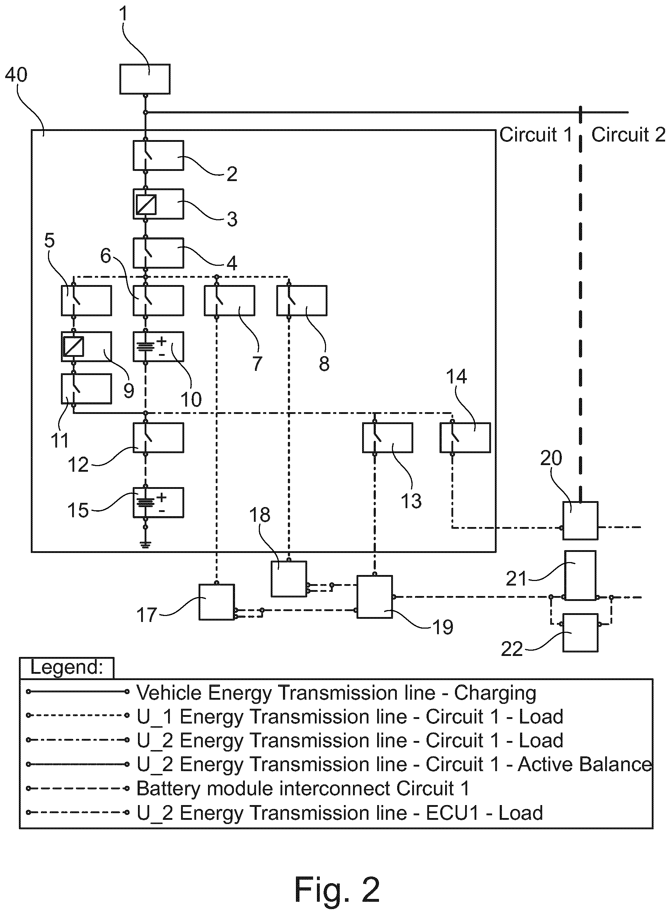

**Fig.** 2 shows the rPMS unit in circuit (1). In circuit (1) smart safety switches SSSW 2 and 4 can decouple the Direct-Current-to-Direct-Current converter (DC/DC) 3 to fulfil the safety requirements of circuit separation in case of failure of the DC/DC 3 converter itself. Similarly, smart safety switches SSSW5 and 11 can decouple a charge balancing DC/DC converter 9. A further smart safety switch SSSW 12 can separate two energy storage modules 10 and 15, and a smart safety switch SSSW 6 can decouple the energy storage modules 10 and 15 from the board network path.

A smart fuse SF 7 protects a wheelend brake actuator 17, smart fuse SF 8 protects a wheelend brake actuator 18, while a smart fuse SF 13 protects an ECU 19, and a smart fuse SF 14 protects a hand control unit HCU 20.

The power input path of this circuit is connected to the vehicle's board network 1 through the DC/DC converter 3. The DC/DC converter 3 operates to provide power conversion to meet the requirements of the energy storage devices.

The two *U*₂ voltage level energy storage modules 15 and 10 connected in series, where the energy storage module 10 is an upper energy storage module and the energy storage module 15 is a lower energy storage module, are able to provide *U*₁ voltage level together required for the wheelend brake actuators 17, 18. Additionally, the DC/DC converter 9 performs active charge balancing between the upper 10 and the lower energy storage modules 15 ensuring coherent operation of storage devices connected in series and balancing their charge levels, since the lower module 15 is responsible for providing *U*₂ for the ECU 19 and other loads. Since the DC/DC converter 9 does not directly supply currents to consumers and the overall system relies on ASIL rated power output from the energy storage modules 10 and 15, it is sufficient to have a quality managed (QM) DC/DC converter 9 component.

The energy storage module (e.g. battery) configuration proposed by this architecture ensures that in case of failure of the upper energy storage module 10, the lower module 15 can still provide the U2 for the loads like ECU 19, and HCU 20, this way through ECU 19 the following loads can also be supplied e.g. a foot brake sensor 21 and a redundant Trailer control module 22.

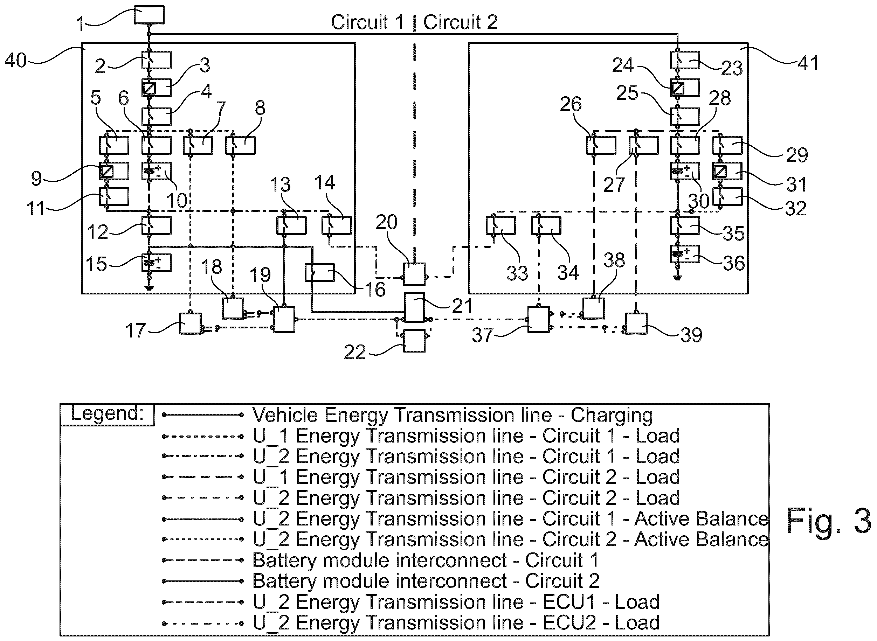

The setup of circuit (2) is done in a similar way as discussed, see in **Fig. 3****.**

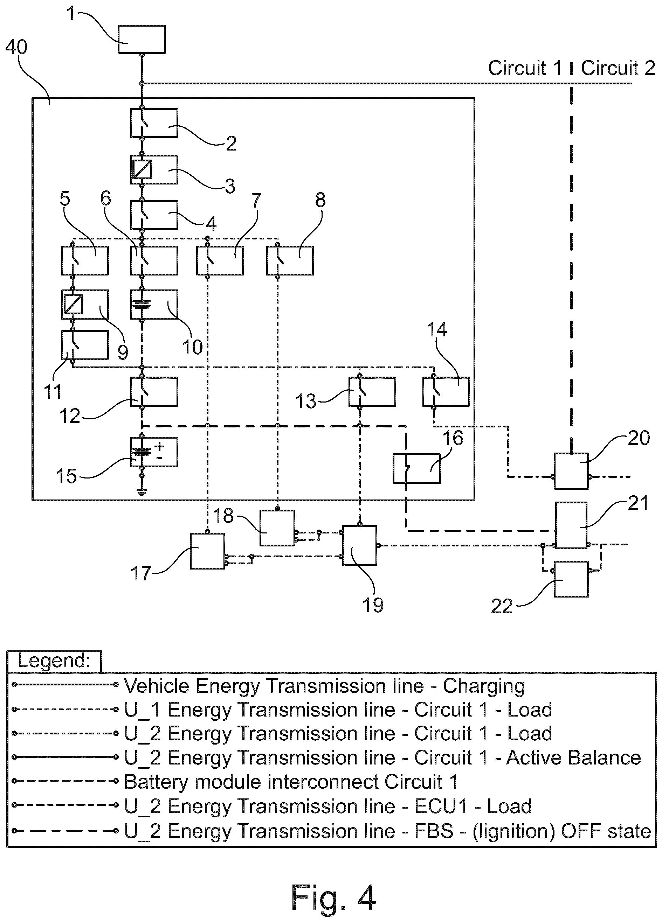

The layout in Fig. 4 represents a rPMS system with an additional normally closed smart fuse SF-NC 16. The SF-NC 16 is used to provide power to the redundant foot brake sensor 21 when the vehicle is in an (ignition) OFF state, and the braking system is deactivated, so that a brake pedal movement can trigger a braking event even in the OFF state. When the vehicle is in (ignition) ON state, and the rPMS is in operational state, then the SF-NC 16 is in open state and redundant foot brake sensor 21 can be supplied by the electronic control unit of brake control 19 directly.

### LIST OF REFERENCE SIGNS

- 1: Board network
- 2: smart safety switch SSSW
- 3: DC/DC converter (for charging)
- 4: smart safety switch SSSW
- 5: smart safety switch SSSW
- 6: smart safety switch SSSW
- 7: smart fuse SF
- 8: smart fuse SF
- 9: DC/DC converter (for balancing)
- 10: (upper) energy storage module
- 11: smart safety switch SSSW
- 12: smart safety switch SSSW
- 13: smart fuse SF
- 14: smart fuse SF
- 15: (lower) energy storage module
- 16: smart fuse SF-NC
- 17: wheelend brake actuator
- 18: wheelend brake actuator
- 19: ECU 1 brake control
- 20: hand control unit HCU
- 21: foot brake sensor
- 22: redundant trailer module
- 23: smart safety switch SSSW
- 24: DC/DC converter (for charging)
- 25: smart safety switch SSSW
- 26: smart fuse
- 27: smart fuse
- 28: smart safety switch SSSW
- 29: smart safety switch SSSW
- 30: (upper) energy storage module
- 31: DC/DC converter (for balancing)
- 32: smart safety switch SSSW
- 33: smart fuse SF
- 34: smart fuse SF
- 35: smart safety switch SSSW
- 36: (lower) energy storage module
- 37: ECU 1 brake control
- 38: wheelend brake actuator
- 39: wheelend brake actuator
- 40: redundant power management system rPMS (circuit 1)
- 41: redundant power management system rPMS (circuit 2)

- 101: board network
- 102: redundant power management system rPMS (circuit 1)
- 103: redundant power management system rPMS (circuit 2)
- 104: wheelend brake actuator
- 105: wheelend brake actuator
- 106: electronic control unit ECU (circuit 1)
- 107: hand control unit HCU
- 108: redundant foot brake sensor rFBS
- 109: redundant trailer control module rTCM
- 110: second circuit's ECU
- 111: wheelend brake actuator
- 112: wheelend brake actuator

## Claims

1. Redundant power supply system (rPMS) for an electro-mechanical brake system for a vehicle, **characterized in that** the redundant power supply system comprises at least two brake circuits wherein each brake circuit comprises at least two energy storage modules (10, 15) connected in series in a configuration, so that the two modules together can supply electric power to brake actuators (17, 18).

2. Redundant power supply system (rPMS) according to claim 1 **characterized by** comprising safety switches, preferably smart safety switches, for said at least two energy storage device modules being configured such that said energy storage device modules can be decoupled by said safety switches.

3. Redundant power supply system (rPMS) according to claim 1 **characterized by** comprising smart fuses for wheelend brake actuators being configured such that said wheelend brake actuators can be decoupled through said smart fuses.

4. Redundant power supply system (rPMS) according to claim 1 **characterized by** comprising containing at least a DC/DC converter (3) to provide power required by the energy storage modules for charging.

5. Redundant power supply system (rPMS) according to any of the preceding claims, **characterized in that** the redundant power supply system in each brake circuit contains at least two energy storage modules (10, 15) connected in series, configured such that the lower part of the modules supplies safety critical loads/consumers.

6. Redundant power supply system (rPMS) according to claim 5 **characterized by** comprising smart fuses (7, 8, 13, 14) configured such that the safety critical loads can be decoupled by said smart fuses.

7. Redundant power supply system (rPMS) according to claim 5 and/or 6 **characterized in that** the safety critical load can be a brake control ECU (19), a redundant Foot Brake Sensor (21), a redundant Trailer Control Module, a Hand Control Module (20), or any sensors.

8. Redundant power supply system (rPMS) according to any of claims 1 to 7 **characterized in that** the system further comprises a DC/DC converter (9) configured such that it performs balancing between the energy storage modules (10, 15), preferably being an upper (10) and a lower (15) energy storage module connected in series.

9. Redundant power supply system (rPMS) according to claim 8 **characterized by** comprising smart safety switches (5) and (11) configured such that the DC/DC converter (9) can be decoupled by said smart safety switches (5) and (11).

10. Redundant power supply system (rPMS) according to claim 5 **characterized in that** it is configured such that in case of failure of the upper energy storage module (10), the lower energy storage module (15) can still ensure the power output for the safety critical loads.

11. Redundant power supply system (rPMS) according to any of the preceding claims, **characterized by** comprising a normally closed switch (16) to ensure power for the Foot Brake Sensor (21) in an (ignition) OFF state.

12. System of commercial vehicle equipped with a redundant power supply system according to any of the preceding claims.
